# EUROPEAN PATENT SPECIFICATION

(11) **EP 3 835 137 B1**
(45) Date of publication and mention of the grant of the patent: **21.02.2024**
(21) Application number: 19214888.0
(22) Date of filing: 10.12.2019
(51) Int. Cl.: B60R 21/0136

(54) **IMPACT SENSOR ASSEMBLY**
AUFPRALLSENSORANORDNUNG
ENSEMBLE DE CAPTEUR D'IMPACT

(43) Date of publication of application: 16.06.2021
(73) Proprietor: Veoneer Sweden Safety Systems AB, 10302 Stockholm (SE)
(72) Inventor: TARTROU, Jean, 95800 Cergy-Pontoise (FR); LEBRUN, Gregory, 95800 Cergy-Pontoise (FR)
(74) Representative: Reichert & Lindner Partnerschaft Patentanwälte

(56) References cited:
- WO-A1-2013/177103
- DE-A1-102011 108 627
- DE-A1-102012 101 859
- DE-A1-102013 215 329
- DE-A1-102013 216 718
- US-B2- 9 975 510

## Description

### FIELD OF THE INVENTION

The invention relates to an impact sensor assembly. In particular, the invention relates to an impact sensor assembly which comprises a first sensor housing and a second sensor housing, each of which housings has a pressure sensor. A deformable tube connects the first sensor housing and the second sensor housing via its tube connections. The first sensor housing, the second sensor housing and the tube are mounted behind a fascia of a vehicle, and the tube extends laterally from a vehicle centreline.

### DESCRIPTION OF THE BACKGROUND ART

International patent application WO 2014/028425 A1 relates to a sensor assembly for a motor vehicle adapted for sensing impacts including pedestrian impacts. The sensor assembly integrates functions of pressure based sensors used in combination with a compressible tube extending laterally across the front surface of the vehicle and the outboard front boundary areas of the front end of the vehicle. Both acceleration and pressure based sensors are mounted into an integrated sensor housing which is mounted in a desired position at the vehicle front fascia front boundary areas.

German patent application DE 10 2009 048 067 A1 relates to a sensor which has a sensing unit for recording a pressure change in a tubular body and detecting an impact on the pressure change. The sensor is arranged in a housing unit, and an adjusting unit adjusts pressure between the tubular body and a surrounding area. The tubular body is pressurized-connected with the housing unit of the sensing unit, and the pressure is adjusted at the housing unit. A pressure compensation opening is provided at an inner side of the housing unit between the tubular body and the sensing unit and is arranged at the housing unit of the sensing unit.

US-Patent US 9,975,510 B2 discloses a hybrid vehicle/pedestrian impact detecting method and apparatus. A pressure sensor assembly is mounted close to the forward crossmember of the vehicle. The pressure sensor assembly is a pressure hose which is in fluid communication with a pressure sensor on both ends of the pressure hose. US 9,975,510 B2 is silent about the mounting of the pressure sensors to the vehicle.

German Patent Application DE 10 2012 101 859 A1 discloses a sensor with a deformable hollow body and a pressure sensor at each end of the hollow body. The mounting of the sensor inside a vehicle is not disclosed.

### SUMMARY OF THE INVENTION

It is therefore an object of the present invention to provide an impact sensor assembly, which eases mounting to a vehicle and allows in addition a reliable operation of the impact sensor assembly.

The above object is achieved by an impact sensor assembly which comprises the features of claim 1.

In an embodiment of the invention, the impact sensor assembly comprises a first sensor housing and a second sensor housing each of which housings has a pressure sensor. The impact sensor assembly also comprises a deformable tube which is connected to the first sensor housing and the second sensor housing via a tube connection. The first sensor housing, the second sensor housing and the deformable tube are mounted behind a fascia of a vehicle. The deformable tube extends laterally from a vehicle centreline. According to the invention, the first sensor housing and/or the second sensor housing are mounted to an electric device casing with a surface. The first sensor housing is mounted on the surface of one electric device casing (first electric device casing). The second sensor housing can be mounted on the surface of another electric device casing (second electric device casing).

The advantage of this configuration is that the impact sensor assembly has the fixing features for the first sensor housing and/or the second sensor housing integrated on a respective other larger electronic device casing, i. e. the first or second electric device casing, which eases the mounting of the impact sensor assembly to a vehicle and, in addition, allows a reliable operation of the impact sensor assembly. For example, the electronic device casings are already present in a bumper assembly of a vehicle. The impact sensor assembly is used preferably to detect the impact of a pedestrian with a vehicle.

In an embodiment, for mounting each sensor housing to the respective first or second electronic device casing, each sensor housing comprises at least two oppositely arranged ears. Each ear has formed a through-hole.

In an embodiment, in order to mount the first sensor housing or the second sensor housing to the surface of the respective first or second electric device casing, the electric device casing carries at least two mounting elements. Each mounting element is surrounded by a distance element. Preferably, the distance element exhibits damping properties. Furthermore, for mounting the at least two mounting elements, they are preferably configured and arranged such that they reach through the through-hole of the respective ear when the first sensor housing or second sensor housing are positioned on the respective electric device casing.

According to further embodiment, each mounting element is a threaded rod, which cooperates with a screw nut for mounting the respective first or second sensor housing to the respective electric device casing.

According to an alternative embodiment, each mounting element is a plastic boss, wherein the mounting of the respective first or second sensor housing to the respective electric device casing is a heat staking process of the plastic boss.

According to a further embodiment, each mounting element has at least two flexible and hooked brackets, wherein both of which cooperate for mounting of the first sensor housing or the second sensor housing with the respective through-hole of each respective ear in a form and force fitting manner.

The impact sensor assembly, which is used to detect a pedestrian impact by a pressure change, has at least two sensor housings which should preferably be mounted in the bumper assembly area where free mounting space is limited. Instead of using a dedicated assembly area, the sensor housings of the invention can be installed on another existing component part of the bumper assembly.

The main aspect of the invention is to integrate fixing features or fixing elements for the impact sensor assembly on other larger electronic device casings which are present in the bumper assembly. The mounting or attachment can be done through screwing, heat staking or snap on.

### BRIEF DESCRIPTION OF THE DRAWINGS

The numerous advantages of the disclosure may be better understood by those skilled in the art by reference to the accompanying figures in which:
**FIG. 1** shows a schematic view of a prior art embodiment of an impact sensor assembly.
**FIG. 2** shows an overhead schematic view of the impact sensor system assembly of Fig. 1 in a possible relationship with motor vehicle structural components.
**FIG. 3** shows a sectional view of an impact sensor assembly according to an embodiment of the invention which can be used in order to detect a pressure change due to an impact at the front side of a vehicle.
**FIG. 4** and **FIG. 5** show an embodiment for mounting the sensor housing.
**FIG. 6** and **FIG 7** show a further embodiment for mounting the sensor housing.
**FIG. 8, FIG 9** and, **FIG. 10** show an additional further embodiment for mounting the sensor housing.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

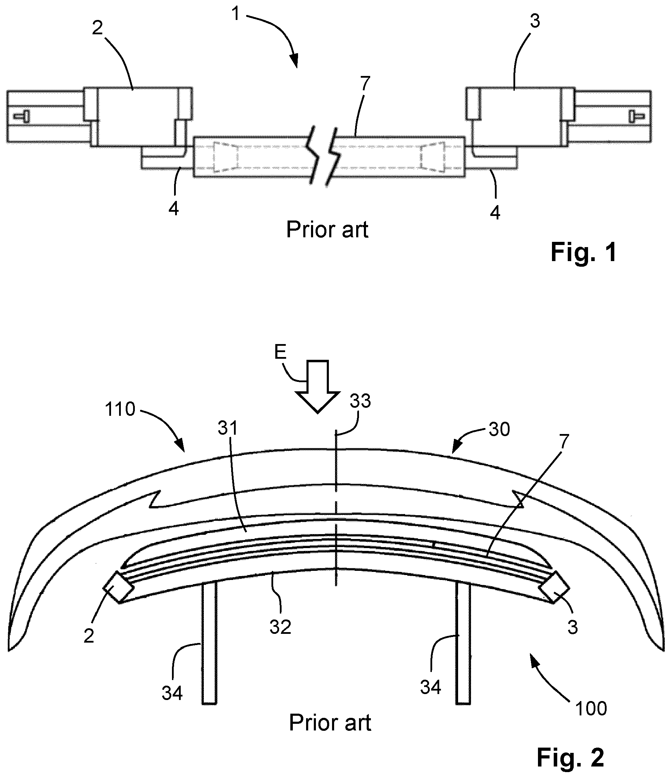

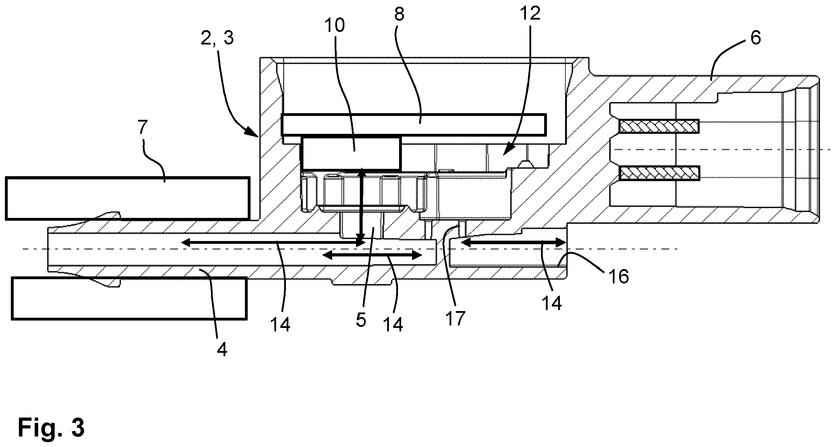

**Fig. 1** schematically shows an impact sensor assembly 1 of a prior art embodiment. The impact sensor assembly 1 comprises a first sensor housing 2 and a second sensor housing 3 which may be identical parts, or they may be specialized parts adapted, for example, for right-hand and left-hand mounting positions. As shown, each of the first sensor housing 2 and the second sensor housing 3 include a barbed tube connection 4. A flexible and deformable tube 7 extends between the first sensor housing 2 and the second sensor housing 3. As will be described in more detail below, the flexible and deformable tube 7 generates a pressure pulse which is detected by internal pressure sensors (see Fig. 3) within the first sensor housing 2 and the second sensor housing 3. Accordingly, impact sensor assembly 1 features a compressive sensor of a type using a fluid pressure signal. The impact sensor assembly 1 is applicable to a variety of motor vehicle types including sedan-type passenger cars.

**Fig. 2** is a schematic view showing the installation position of the impact sensor assembly 1 (see Fig. 1) As mentioned above, the impact sensor assembly 1 is mounted behind a fascia 30 and may also be mounted behind an energy absorbing material 31 of a bumper assembly 110 of a vehicle 100. A cross beam 32 extends laterally from a vehicle centerline 33 and is supported by longitudinal beams 34 in an axial direction with respect to vehicle centerline 33. An impact of front end E deforms fascia 30, compressing the deformable tube 7 between the fascia 30 and the cross beam 32, thereby generating the pressure signal mentioned previously. At both ends of deformable tube 7, the first sensor housing 2 and the second sensor housing 3 with the pressure sensor 10 (see Fig. 3) are positioned.

**Fig. 3** is a sectional view of first or second sensor housing 2, 3. Conveniently, the pressure sensor 10 is in a sensor housing 2, 3 which is formed, for example, by injection molding of a plastic material (thermoplast or resin). The first or second sensor housing 2, 3 has a tube connection 4 and an electrical connector 6 formed thereon. According to the embodiment shown here, the deformable tube 7 is mounted to the tube connection 4. A pressure sensor 10 is mounted to the lower surface of a printed circuit board 8. The formed on extending tube connection 4 of the first or second sensor housing 2, 3 is in fluid communication 14 with the pressure sensor 10 via a connection 5. The second housing 2, 3 has formed a ventilation connection 16 which is in fluid communication 14 with the tube connection 4 via at least one ventilation hole 17.

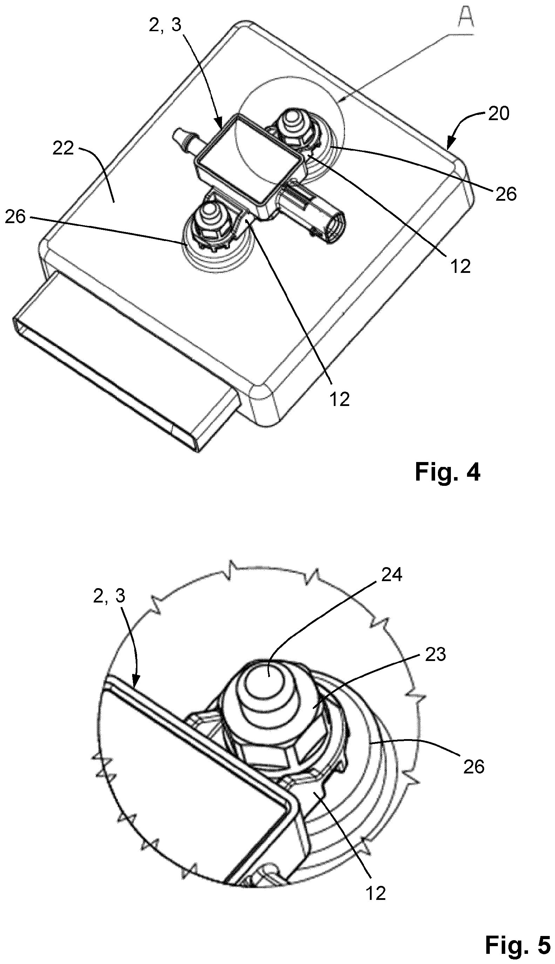

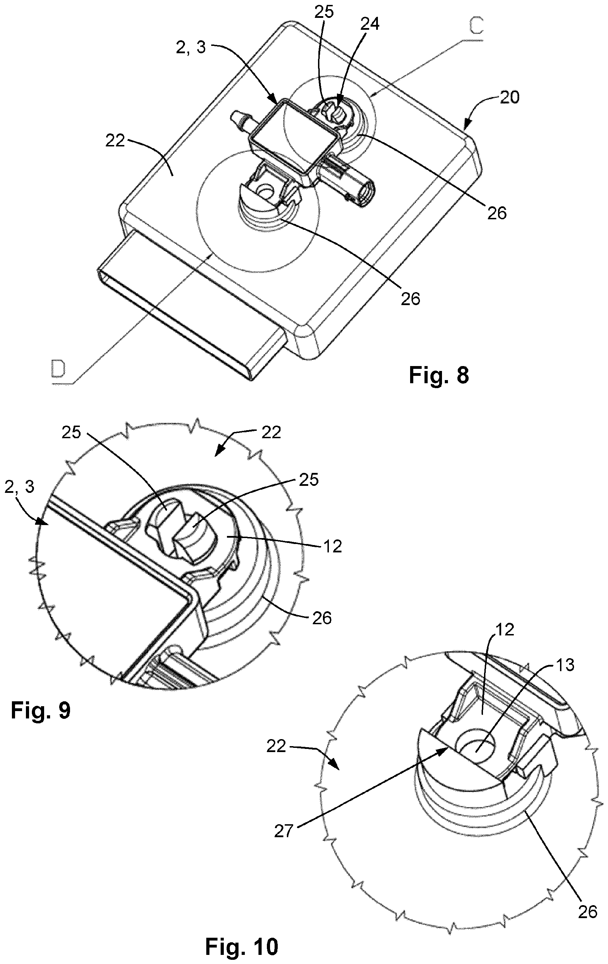

**Fig. 4** and **Fig. 5** show an embodiment for mounting the sensor housing 2, 3. Fig. 5 is an enlarged view of the marked area A in Fig. 4. According to this embodiment, each mounting element 24, which is provided on the surface 22 of an electronic device 20 is a threaded rod. Each mounting element 24 is surrounded by a distance element 26. Optionally, the distance element 26 exhibits damping properties, so that the mounted first sensor housing 2 and second sensor housing 3 are mostly isolated from vibrations of the vehicle 100 during driving. The at least two mounting elements 24 are arranged such that they reach through the through-hole 13 (see Fig. 10) of each ear 12 of the positioned first sensor housing 2 or second sensor housing 3. Each mounting element 24, which is a threaded rod, cooperates with a screw nut 23, in order to mount the respective first or second sensor housing 2, 3 to the respective electric device casing 20.

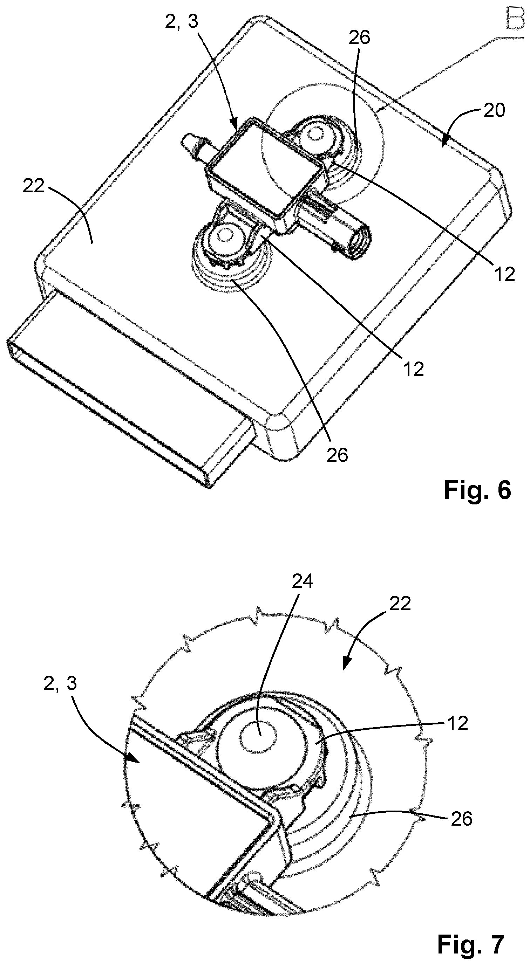

**Fig. 6** and **Fig. 7** show a further embodiment for mounting the respective sensor housing 2, 3. Fig. 7 is an enlarged view of the marked area B in Fig. 6. Here, each mounting element 24 is a plastic boss. The mounting of the respective first or second sensor housing 2, 3 to the respective electric device casing 20 is carried out by a heat staking process of the plastic boss. The heat staking process results in a force fit of the ears 12 with the respective electric device casing 20. The ears 12 each rest on a distance element 26 which surrounds the respective mounting element 24. The distance elements 26 are placed on the surface 22 of the respective electronic device casing 20.

**Fig. 8, Fig. 9** and **Fig. 10** show an additional further embodiment for mounting the sensor housing 2, 3. According to the embodiment shown here, each mounting element 24 has at least two flexible and hooked brackets 25. In order to mount the first sensor housing 2 or the second sensor housing 3 both of the flexible and hooked brackets 25 reach through the through-hole 13 of each respective ear 12 and cooperate with the respective ear 12 in a form and force fitting manner. Fig. 9 is an enlarged view of the marked area C in Fig. 6. The hooked brackets 25 cooperate with the respective ear 12 and hold the respective first sensor or second housing 2, 3 firmly in contact with the distance element 26. Fig. 10 is an enlarged view of the marked area D in Fig. 8. At least one distance element 26 has formed a limit stop 27 for the ear 12 in order to align the first sensor housing 2 or the second sensor housing 3 with the respective distance elements 26. The form fit of the at least one distance element 26 and the ear 12 of the first sensor housing 2 or the second sensor housing 3 allows a simple and reliable mounting process of the first sensor housing 2 or the second sensor housing 3 to the respective electric device casing 20.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### List of Reference Numerals

- 1: Impact sensor assembly
- 2: First sensor housing
- 3: Second sensor housing
- 4: Tube connection
- 5: Connection
- 6: Electrical connector
- 7: Deformable tube
- 8: Printed circuit board
- 9: Electrical terminals
- 10: Pressure sensor
- 12: Ear
- 13: Through-hole
- 14: Fluid communication
- 16: Ventilation connection
- 17: Ventilation hole
- 20: Electronic device casing
- 22: Surface
- 23: Screw nut
- 24: Mounting element
- 25: Hooked bracket
- 26: Distance element
- 27: Limit stop
- 30: Fascia
- 31: Energy absorbing material
- 32: Cross beam
- 33: Vehicle centerline
- 34: Longitudinal beams
- 100: Vehicle
- 110: Bumper assembly
- A: Marked area
- B: Marked area
- C: Marked area
- D: Marked area
- E: Front end

## Claims

1. An arrangement for mounting an impact sensor assembly (1) to a vehicle (100) comprising
a first sensor housing (2) and a second sensor housing (3) each of which housings has a pressure sensor (10);
a deformable tube (7) connected to the first sensor housing (2) and the second sensor housing (3) via a tube connection (4); and
a fascia (30) of the vehicle (100), wherein the first sensor housing (2), the second sensor housing (3) and the deformable tube (7) of the impact sensor assembly (1) are mounted behind the fascia (30) of the vehicle (100), and between an energy absorbing material (31) and a cross beam (32), the deformable tube (7) of the impact sensor assembly (1) is mounted, wherein the deformable tube (7), the energy absorbing material (31) and the cross beam (32) extend laterally from a vehicle centerline (33);
**characterized by**
a first electric device casing (20) and/or a second electric device casing (20) of a bumper assembly (110) of the vehicle (100) each of which defining a surface (22), wherein the first sensor housing (2) is mounted to the surface (22) of the first electric device casing (20) and/or the second sensor housing (3) is mounted to the surface (22) of the second sensor housing (3);
at least two mounting elements (24) provided on the surface (22) of the first electric device casing (20) and/or the second electric device casing (20); and
a distance element (26) with damping properties surrounding each mounting element (24) for isolating the first sensor housing (2) and/or the second sensor housing (3) from vibrations.

2. The arrangement for mounting an impact sensor assembly (1) as claimed in claim 1, wherein each sensor housing (2, 3) has at least two oppositely arranged ears (12) each with a through-hole (13).

3. The arrangement for mounting an impact sensor assembly (1) as claimed in any of the preceding claims, wherein the surface (22) of each electric device casing (20) carries the at least two mounting elements (24), which are each surrounded by the distance element (26), wherein the at least two mounting elements (24) are configured and arranged such, that they reach through the through-hole (13) of the each ear (12) of the positioned first sensor housing (2) or second sensor housing (3).

4. The arrangement for mounting an impact sensor assembly (1) as claimed in claim 3, wherein each mounting element (24) is a threaded rod, which cooperates with a screw nut (23) for mounting the respective first or second sensor housing (2, 3) to the respective electric device casing (20).

5. The arrangement for mounting an impact sensor assembly (1) as claimed in claim 3, wherein each mounting element (24) is a plastic boss, wherein the mounting of the respective first or second sensor housing (2, 3) to the respective electric device casing (20) is a heat staking process of the plastic boss (24).

6. The arrangement for mounting an impact sensor assembly (1) as claimed in claim 3, wherein each mounting element (24) has at least two flexible and hooked brackets (25), both of which cooperate for mounting of the first sensor housing (2) or the second sensor housing (3) with the respective through-hole (13) of each respective ear (12) in a form and force fitting manner.

## Patentansprüche

1. Eine Anordnung zur Montage einer Aufprallsensoranordnung (1) an einem Fahrzeug (100) umfassend
ein erstes Sensorgehäuse (2) und ein zweites Sensorgehäuse (3), die jeweils einen Drucksensor (10) aufweisen;
ein verformbares Rohr (7), das über eine Rohrverbindung (4) mit dem ersten Sensorgehäuse (2) und dem zweiten Sensorgehäuse (3) verbunden ist; und
ein Armaturenbrett (30) des Fahrzeugs (100), wobei das erste Sensorgehäuse (2), das zweite Sensorgehäuse (3) und das verformbare Rohr (7) der Aufprallsensoranordnung (1) hinter dem Armaturenbrett (30) des Fahrzeugs (100) angebracht sind, und zwischen einem energieabsorbierenden Material (31) und einem Querträger (32) das verformbare Rohr (7) der Aufprallsensoranordnung (1) angebracht ist, wobei das verformbare Rohr (7), das energieabsorbierende Material (31) und der Querträger (32) sich seitlich von einer Fahrzeugmittellinie (33) erstrecken;
**gekennzeichnet durch**
ein erstes elektrisches Gerätegehäuse (20) und/oder ein zweites elektrisches Gerätegehäuse (20) einer Stoßfängerbaugruppe (110) des Fahrzeugs (100), die jeweils eine Oberfläche (22) definieren, wobei das erste Sensorgehäuse (2) an der Oberfläche (22) des ersten elektrischen Gerätegehäuses (20) angebracht ist und/oder das zweite Sensorgehäuse (3) an der Oberfläche (22) des zweiten Sensorgehäuses (3) angebracht ist;
mindestens zwei Befestigungselemente (24), die auf der Oberfläche (22) des ersten elektrischen Gerätegehäuses (20) und/oder des zweiten elektrischen Gerätegehäuses (20) vorgesehen sind; und
ein jedes Befestigungselement (24) umgebendes Distanzelement (26) mit Dämpfungseigenschaften zur Isolierung des ersten Sensorgehäuses (2) und/oder des zweiten Sensorgehäuses (3) gegen Vibrationen.

2. Die Anordnung zur Montage einer Aufprallsensoranordnung (1) nach Anspruch 1, wobei jedes Sensorgehäuse (2, 3) mindestens zwei gegenüberliegende Ohren (12) mit je einer Durchgangsbohrung (13) aufweist.

3. Die Anordnung zur Montage einer Aufprallsensoranordnung (1) nach einem der vorhergehenden Ansprüche, wobei die Oberfläche (22) jedes elektrischen Gerätegehäuses (20) die mindestens zwei Befestigungselemente (24) trägt, die jeweils von dem Distanzelement (26) umgeben sind, wobei die mindestens zwei Befestigungselemente (24) so gestaltet und angeordnet sind, dass sie durch die Durchgangsbohrung (13) des jeweiligen Ohres (12) des positionierten ersten Sensorgehäuses (2) oder zweiten Sensorgehäuses (3) hindurchreichen.

4. Die Anordnung zur Montage einer Aufprallsensoranordnung (1) nach Anspruch 3, wobei jedes Befestigungselement (24) eine Gewindestange ist, die mit einer Schraubenmutter (23) zur Befestigung des jeweiligen ersten oder zweiten Sensorgehäuses (2, 3) an dem jeweiligen Elektrogerätegehäuse (20) zusammenwirkt.

5. Die Anordnung zur Befestigung einer Aufprallsensoranordnung (1) nach Anspruch 3, wobei jedes Befestigungselement (24) ein Kunststoffnocken ist, wobei die Befestigung des jeweiligen ersten oder zweiten Sensorgehäuses (2, 3) an dem jeweiligen elektrischen Gerätegehäuse (20) ein Heißklebevorgang des Kunststoffnockens (24) ist.

6. Die Anordnung zur Befestigung einer Aufprallsensoranordnung (1) nach Anspruch 3, wobei jedes Befestigungselement (24) mindestens zwei flexible und hakenförmige Laschen (25) aufweist, die beide zur form- und kraftschlüssigen Befestigung des ersten Sensorgehäuses (2) oder des zweiten Sensorgehäuses (3) mit der jeweiligen Durchgangsbohrung (13) des jeweiligen Ohres (12) zusammenwirken.

## Revendications

1. Un agencement pour le montage d'un ensemble de capteurs d'impact (1) sur un véhicule (100) comprenant
un premier boîtier de capteur (2) et un second boîtier de capteur (3), chacun de ces boîtiers étant équipé d'un capteur de pression (10) ;
un tube déformable (7) relié au premier boîtier de capteur (2) et au second boîtier de capteur (3) par l'intermédiaire d'un raccord de tube (4) ; et
un bord (30) du véhicule (100), dans lequel le premier boîtier de capteur (2), le second boîtier de capteur (3) et le tube déformable (7) de l'ensemble de capteurs d'impact (1) sont montés derrière le bord (30) du véhicule (100), et entre un matériau absorbant l'énergie (31) et une traverse (32), le tube déformable (7) de l'ensemble capteur d'impact (1) est monté, dans lequel le tube déformable (7), le matériau absorbant l'énergie (31) et la traverse (32) s'étendent latéralement à partir de l'axe central du véhicule (33) ;
**caractérisé par**
un premier boîtier de dispositif électrique (20) et/ou un second boîtier de dispositif électrique (20) d'un ensemble de pare-chocs (110) du véhicule (100), chacun définissant une surface (22), dans lequel le premier boîtier de capteur (2) est monté sur la surface (22) du premier boîtier de dispositif électrique (20) et/ou le second boîtier de capteur (3) est monté sur la surface (22) du second boîtier de capteur (3) ;
au moins deux éléments de montage (24) prévus sur la surface (22) du premier boîtier de dispositif électrique (20) et/ou du second boîtier de dispositif électrique (20) ; et
un élément de distance (26) ayant des propriétés d'amortissement entourant chaque élément de montage (24) pour isoler le premier boîtier de capteur (2) et/ou le second boîtier de capteur (3) des vibrations.

2. L'agencement pour le montage d'un ensemble de capteurs d'impact (1) selon la revendication 1, dans lequel chaque boîtier de capteur (2, 3) comporte au moins deux oreilles (12) disposées de manière opposée et dotées chacune d'un trou de passage (13).

3. L'agencement pour le montage d'un ensemble de capteurs d'impact (1) selon l'une quelconque des revendications précédentes, dans lequel la surface (22) de chaque boîtier de dispositif électrique (20) porte les au moins deux éléments de montage (24), qui sont chacun entourés par l'élément de distance (26), dans lequel les au moins deux éléments de montage (24) sont configurés et disposés de telle sorte qu'ils atteignent à travers le trou de passage (13) de chaque oreille (12) du premier boîtier de capteur (2) ou du second boîtier de capteur (3) positionné.

4. L'agencement pour le montage d'un ensemble de capteurs d'impact (1) selon la revendication 3, dans lequel chaque élément de montage (24) est une tige filetée qui coopère avec un écrou à vis (23) pour monter le premier ou le second boîtier de capteur (2, 3) sur le boîtier de dispositif électrique (20).

5. L'agencement pour le montage d'un ensemble de capteurs d'impact (1) selon la revendication 3, dans lequel chaque élément de montage (24) est un bossage en plastique, le montage du premier ou du second boîtier de capteur (2, 3) sur le boîtier de dispositif électrique (20) étant un processus de thermofixation du bossage en plastique (24).

6. L'agencement pour le montage d'un ensemble de capteurs d'impact (1) selon la revendication 3, dans lequel chaque élément de montage (24) comporte au moins deux supports flexibles et accrochés (25), qui coopèrent tous deux pour le montage du premier boîtier de capteur (2) ou du second boîtier de capteur (3) avec le trou de passage respectif (13) de chaque oreille respective (12) d'une manière qui s'adapte à la forme et à la force.
